# EUROPEAN PATENT SPECIFICATION

(11) **EP 2 918 206 B1**
(45) Date of publication and mention of the grant of the patent: **18.05.2016**
(21) Application number: 14158922.6
(22) Date of filing: 11.03.2014
(51) Int. Cl.: A47J 43/042, A47J 43/07

(54) **Beverage foams making device**
Vorrichtung zur Erzeugung von Getränkeschäumen
Dispositif de fabrication de mousses de boisson

(43) Date of publication of application: 16.09.2015
(73) Proprietor: Wang, Hsien-Ming, Tainan City 70960 (TW); Wang, Wei-Hsiang, Tainan City 70960 (TW)
(72) Inventor: Wang, Hsien-Ming, Tainan City 70960 (TW); Wang, Wei-Hsiang, Tainan City 70960 (TW)
(74) Representative: Casalonga

(56) References cited:
- EP-A1- 2 636 344
- WO-A1-01/74174
- DE-B- 1 084 243
- DE-U- 1 724 140
- US-A- 4 312 596

## Description

### BACKGROUND OF THE INVENTION

### 1. Fields of the invention

The present invention relates to a beverage foams making device, and more particularly, to a beverage foams making device having a stirring member with multiple holes so as to obtain fine foams.

In particular, the present invention relates to a beverage foams making device according to the preamble of claim 1, such as it is for example known from EP 2 636 344, US 4 312 596, WO 01/74174, DE 10 84 243 or DE 17 24 140.

### 2. Descriptions of Related Art

The conventional way to make foams to a beverage so as to increase the taste of the beverage is to shake the beverage in a cup manually. In other words, the beverage is put in a cup and the user shakes the cup back and forth quickly to generate foams and special fragrance. Fructose, syrups and other flavoring substances can be added into the beverage to obtain the beverage. However, the manual way can easily damage the user's arms and wrists if too many cups of the beverage are required.

An electric foams making device is developed to make the foams to the beverage and generally comprises a cup, a separation member and a base, wherein the cup is threadedly connected to the base. The separation member is mounted to the base and located in the cup. The separation member has multiple holes. The base has a recess and a shaft extends from the inside of the recess. The shaft is connected with a stirring blade.

When in use, the cup and the base are connected with a driving machine which has a motor to drive the shaft and the stirring blade. The stirring blade stirs the beverage quickly so as to form the foams. Usually, the beverage is served with ice cubes so that the separation member is necessary to prevent the stirring blade from directly hitting the ice cubes. Nevertheless, the existence of the separation member makes the shaking device to be bulky and the manufacturing cost for the base is increased. Furthermore, the foams are affected by the separation member and cannot obtain the foams as desired.

The present invention intends to provide a beverage foams making device to improve the shortcomings mentioned above.

### SUMMARY OF THE INVENTION

The present invention relates to a beverage foams making device and comprises a base having a shaft rotatably extending therethrough. A stirring member is connected to the first end of the shaft and has multiple holes.

The stirring member has at least one protrusion extending therefrom.

Preferably, a driving member is connected to the second end of the shaft. The driving member is cooperated with a driving device which drives the shaft to rotate.

Preferably, the stirring member is a round disk.

Preferably, a cup has a connection portion connected to the lower end thereof. The connection portion is connected to the base and the stirring member is located in the cup.

Preferably, the connection portion has an outer threaded portion and the base has an inner threaded portion which is connected to the outer threaded portion.

Preferably, the connection portion has a seal connected to the underside thereof.

The beverage is stirred by the stirring member and the holes of the stirring member make fine foams in the beverage. When green tea or black tea is put in the cup, the protrusion on the stirring member blends green tea or black tea to generate fine foams. When the beverage is added with honey, syrups or cream, the protrusion blends them evenly to increase better taste and flavor to the beverage. The stirring member and the protrusion have simple structure and can easily make foams and blend the beverage and the additions. When the beverage is stirred with ice cubes, the ice cubes are maintained and not broken.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view of the beverage foams making device of the present invention;
Fig. 2 is a perspective view to show that the beverage foams making device of the present invention is cooperated with a driving device;
Fig. 3 is a cross sectional view showing the beverage foams making device of the present invention, and
Fig. 4 shows that the beverage foams making device of the present invention is cooperated with the driving device to make a beverage.

### DETAILED DESCRIPTION OF THE PREFERRED EMBODIMENT

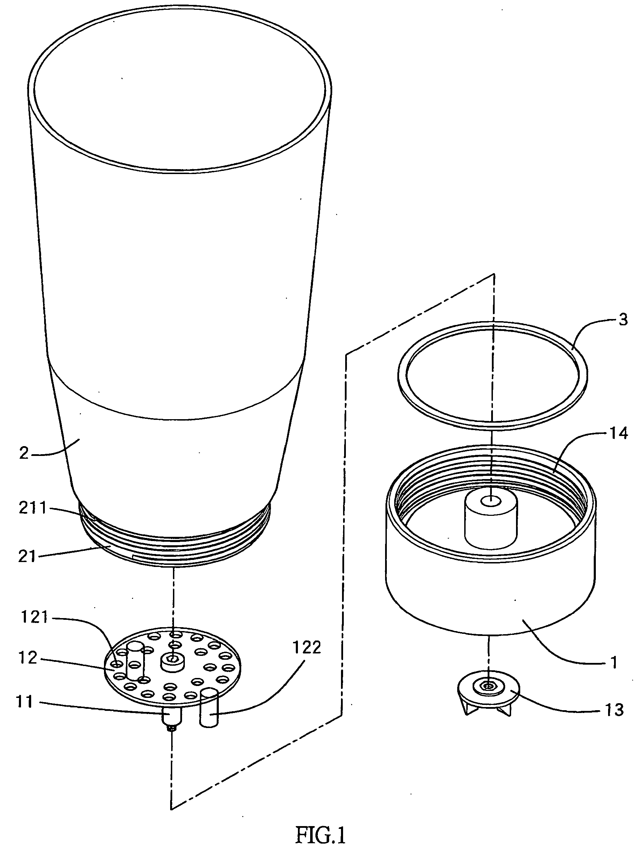

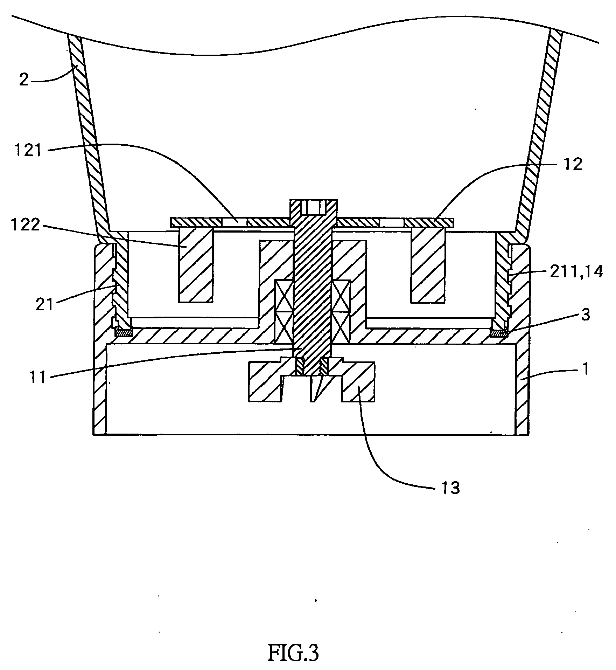

Referring to Figs. 1 to 3, the beverage foams making device of the present invention comprises a base 1 and a shaft 11 rotatably extends through the base 1. A stirring member 12 and a driving member 13 are respectively connected to the first end and the second end of the shaft 11. The stirring member 12 is a round disk and has multiple holes 121. The driving member 13 is cooperated with a driving device 4 which drives the shaft 11 and the stirring member 12 to rotate. The base 1 has an inner threaded portion 14. The stirring member 12 has at least one protrusion 122 extending therefrom.

A cup 2 has a connection portion 21 connected to the lower end thereof, and the connection portion 21 has an outer threaded portion 211 which is connected to the inner threaded portion 14 so that the cup 2 is connected to the base 1. The stirring member 12 is located in the cup 2. The connection portion 21 has a seal 3 connected to the underside thereof so as to prevent from leakage.

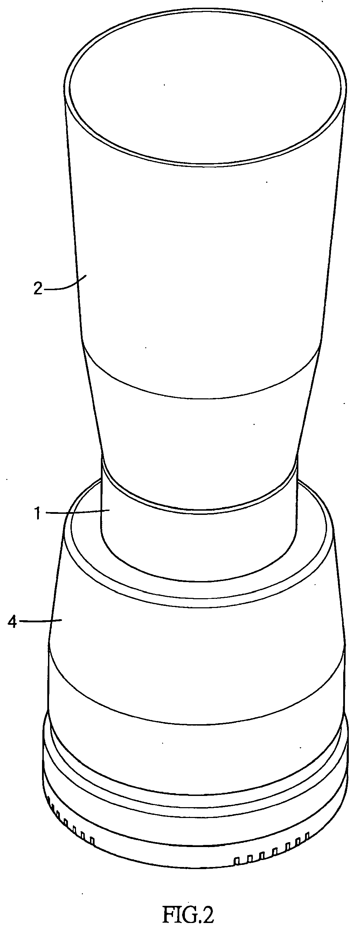

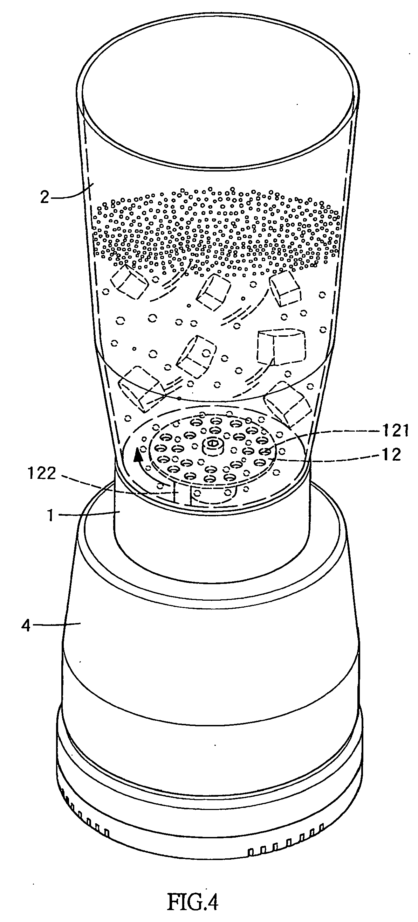

As shown in Figs. 2 to 4, when in use, the cup 2 is threadedly connected to the base 1, and the driving member 13 is connected to the driving device 4. The beverage such as green tea or black tea is put in the cup 2 and ice cubes are added, the driving device 4 drives the shaft 11 and the stirring member 12 to rotate to stir the beverage to mix with air to generate foams. The stirring member 12 has the at least one protrusion 122 extending therefrom so that the at least one protrusion 122 on the stirring member 12 blends the honey, syrups or cream evenly to increase the taste and flavor of the beverage. The at least one protrusion 122 also evenly blends the additions and the beverage.

The present invention has a simple structure and is easily operated to make foams, and the ice cubes are maintained and not broken.

It is noted that the beverage can also be milk, juice or coffee, and the same features are still available to these beverages.

While we have shown and described the embodiment in accordance with the present invention, it should be clear to those skilled in the art that further embodiments may be made without departing from the scope of the present invention.

## Claims

1. A beverage foams making device comprising:
a base (1) having a shaft (11) rotatably extending therethrough, and
a stirring member (12) connected to a first end of the shaft (11) and having multiple holes (121), the stirring member (12) having at least one protrusion (122) extending therefrom,
**characterized in that**
a cup (2) has a connection portion (21) connected to a lower end thereof, the connection portion (21) being connected to said base (1),
the stirring member (12) is located in the cup (2) with the stirring member (12) being a round disk located at the lower portion of the cup (2), and
the protrusions of the stirring member are cylindrical.

2. The device as claimed in claim 1, wherein a driving member (13) is connected to a second end of the shaft (11), the driving member (13) is cooperated with a driving device (4) which drives the shaft (11) to rotate.

3. The device as claimed in claim 1, wherein the connection portion (21) has an outer threaded portion (211) and the base (1) has an inner threaded portion (14) which is connected to the outer threaded portion (211).

4. The device as claimed in claim 3, wherein the connection portion (21) has a seal (3) connected to an underside thereof.

## Patentansprüche

1. Getränkeschäume-Herstellvorrichtung, die umfasst:
einen Sockel (1), der eine Welle (11) aufweist, die sich drehbar durch ihn erstreckt, und
ein Rührelement (12), das mit einem ersten Ende der Welle (11) verbunden ist und mehrere Löcher (121) aufweist, wobei das Rührelement (12) mindesten einen Vorsprung (122) aufweist, der sich von ihm aus erstreckt,
**dadurch gekennzeichnet, dass**
ein Gefäß (2) einen Verbindungsabschnitt (21) aufweist, der mit einem unteren Ende davon verbunden ist, wobei der Verbindungsabschnitt (21) mit dem Sockel (1) verbunden ist,
das Rührelement (12) sich in dem Gefäß (2) befindet, wobei das Rührelement (12) eine runde Scheibe ist, die sich an dem unteren Abschnitt des Gefäßes (2) befindet, und
die Vorsprünge des Rührelements zylinderförmig sind.

2. Vorrichtung nach Anspruch 1, wobei ein Antriebselement (13) mit einem zweiten Ende der Welle (11) verbunden ist, wobei das Antriebselement (13) mit einer Antriebsvorrichtung (4) zusammenwirkt, die die Welle (11) derart antreibt, dass sie sich dreht.

3. Vorrichtung nach Anspruch 1, wobei der Verbindungsabschnitt (21) einen äußeren mit einem Gewinde versehenen Abschnitt (211) aufweist und der Sockel (1) einen inneren mit einem Gewinde versehenen Abschnitt (14) aufweist, der mit dem äußeren mit einem Gewinde versehen Abschnitt (211) verbunden ist.

4. Vorrichtung nach Anspruch 3, wobei der Verbindungsabschnitt (21) eine Dichtung (3) aufweist, die mit einer Unterseite von ihm verbunden ist.

## Revendications

1. Dispositif de fabrication de mousses de boisson comprenant :
une base (1) à travers laquelle s'étend à rotation un axe (11), et
un élément agitateur (12) connecté à une première extrémité de l'axe (11) et comportant de multiples trous (121), l'élément agitateur (12) ayant au moins une protubérance (122) qui s'étend depuis celui-ci,
**caractérisé en ce que**
un bol (2) comporte une partie de connexion (21) connectée à une extrémité inférieure de celui-ci, la partie de connexion (21) étant connectée à ladite base (1),
l'élément agitateur (12) est situé dans le bol (2), l'élément agitateur (12) étant un disque rond situé dans la partie inférieure du bol (2), et
les protubérances de l'élément agitateur sont cylindriques.

2. Dispositif selon la revendication 1, dans lequel un élément d'entraînement (13) est connecté à une deuxième extrémité de l'axe (11), l'élément d'entraînement (13) coopère avec un dispositif d'entraînement (4) qui entraîne l'axe (11) en rotation.

3. Dispositif selon la revendication 1, dans lequel la partie de connexion (21) comporte une partie filetée extérieure (211) et la base (1) comporte une partie filetée intérieure (14) qui est connectée à la partie filetée extérieure (211).

4. Dispositif selon la revendication 3, dans lequel la partie de connexion (21) a un joint (3) connecté à une face inférieure de celle-ci.
